# NEW EUROPEAN PATENT SPECIFICATION

(11) **EP 1 985 774 B2**
(45) Date of publication and mention of the opposition decision: **30.07.2014**
(45) Mention of the grant of the patent: 17.08.2011
(21) Application number: 07008456.1
(22) Date of filing: 25.04.2007
(51) Int. Cl.: E04C 3/292

(54) **Metal webs in and for timber trusses**
Metallsteg in und für Holzfachwerk
Poutre de treillis métallique dans et pour poutres en bois

(43) Date of publication of application: 29.10.2008
(73) Proprietor: Wolf Systems Limited, Shilton Coventry CV7 9QL (GB)
(72) Inventor: Leaney, David Andrew, Shilton Coventry CV7 9QL (GB)
(74) Representative: Shaw, Matthew Nigel

(56) References cited:
- GB-A- 2 121 848
- US-A- 3 708 942
- US-A- 4 241 557
- US-A- 4 475 328
- US-A- 4 562 683
- US-A- 5 899 042

## Description

### Description of Invention

This invention relates to trusses of the kind which includes timber elements connected to one another by metal webs. The invention has been devised, in relation to, and hereafter will be described in the context of, parallel chord trusses, but it is to be appreciated the invention may be applicable in other types of truss where similar or analogous problems, as described hereafter, arise.

Parallel chord trusses utilising elongate timber chords spaced from and generally parallel to one another, connected by metal webs extending between the spaced chords, are well known. For example, there are the present applicant's "easi-joist®" trusses. Such trusses may be used in the construction of floors in buildings, and present several advantages over solid timber joists including light weight, the ability to route services through the spaces between the chords, long-term dimensional stability, sound and vibration damping qualities, and the ability to span lengths greater than can readily be done with traditional timber joists. When installed, the chords usually are spaced one above the other, and therefore will be referred to herein, for convenience, as the top and bottom chords, although in many cases there is no distinction between which of the chords is to be the top one and which is to be the bottom one, and references herein to "vertical", and analogous terms, have regard to such orientation.

In such a truss, the chords are secured, and maintained in the required spaced relationship, to one another by metal webs attached to both sides of the truss, the webs being spaced along the length of the truss. The metal webs are configured to be secured to the vertical side surfaces of the chords, by being provided with attachment portions which are formed as nail plates, i.e. having integrally formed teeth which may be pressed into the timber of the chords. The attachment portions of the metal webs are connected to one another by spacing portions which extend across the space between the chords. Usually the metal webs are pressings from sheet metal e.g. steel, galvanized or otherwise treated to resist corrosion, and the spacing portions between the attachment portions are provided with flanges along their edges to resist bending and buckling under the loads imposed thereon in use and during transport/storage prior to use. A truss will usually also include timber spacing elements extending vertically between the top and bottom chords, such spacing elements being secured to the top and bottom chords by nail plates pressed into the engagement with adjacent parallel side surfaces of the spacing elements and chords. Such timber spacing elements may be provided at the ends, and possibly at one or more intermediate positions, lengthwise of the truss.

A truss such as described above typically is manufactured by placing the timber chords in the required spaced parallel relationship to one another, alongside one another on a fabrication surface. The required timber spacing elements are disposed therebetween, and the required number of metal webs placed where required. The nail plates for fixing the timber spacers are also placed in the required positions. Such nail plates rest on the tips of their integrally formed teeth on the upwardly presented surfaces (which are the side surfaces in use) of the chords and timber spacing elements, while the tips of the teeth of the attachment portions of the metal webs rest on the upwardly presented surfaces of the chords. A pressing device is then used successively to press the nail plates and attachment portions of the metal webs so that their teeth penetrate the timber, to secure them in position.

The main potential modes of failure of a truss as above described are detachment from the chords of the attachment portions of the metal webs, and buckling of the spacing portions of the webs, usually in the vicinity of the attachment portions thereof. One problem encountered in manufacture of the trusses is that in the course of the pressing process the metal webs might be moved slightly as their teeth are embedded in the timber of the chords. It is broadly the object of the present invention to address these problems, as well as generally to provide a metal web of improved performance as described hereafter.

GB 2121848A discloses a stud connector with head portions having nails, and a shank with edge flanges ending in lugs which rest against the facing surface of the timber studs. The lugs are not intended to be embedded into those surfaces, and extend, unsupported, perpendicular to the shank, rendering them vulnerable to damage. US 5899042 A discloses a metal web according to the preamble of claim 1.

According to one aspect of the present invention, we provide a metal web as defined by claim 1.

One advantage of the provision of an engagement formation or formations in a metal web in accordance with the invention is that by becoming embedded into the timber element surface transverse to that which the attachment portion engage, the metal web is resistant to displacement while the teeth on the attachment portions are being pressed into the timber elements. A further advantage, arising when the or each engagement formation is provided by an end portion of a flange of the spacing portion of the metal web, is that it helps support the flange in relation to the timber element, with the result that buckling of the spacing portion of the web in the vicinity of the timber element becomes substantially less likely.

Metal webs of various configurations, e.g. generally I-shaped, V-shaped or W-shaped are known for use in trusses of the kind with which the invention is concerned. A metal web in accordance with the invention may be of any of such configurations. In particular, and as described hereafter, it may be V-shaped with two attachment portions for connection to one timber chord of a truss and an intermediate attachment portion for attachment to the other timber chord of the truss, the spacing portions extending between the attachment portions at an inclination to the length of the truss. The web may be separable in its intermediate attachment portion, to provide two I-shaped webs.

According to another aspect of the invention, we provide a truss comprising timber chords secured in spaced relation to one another by at least one, preferably by a plurality of, metal webs in accordance with the first aspect of the invention.

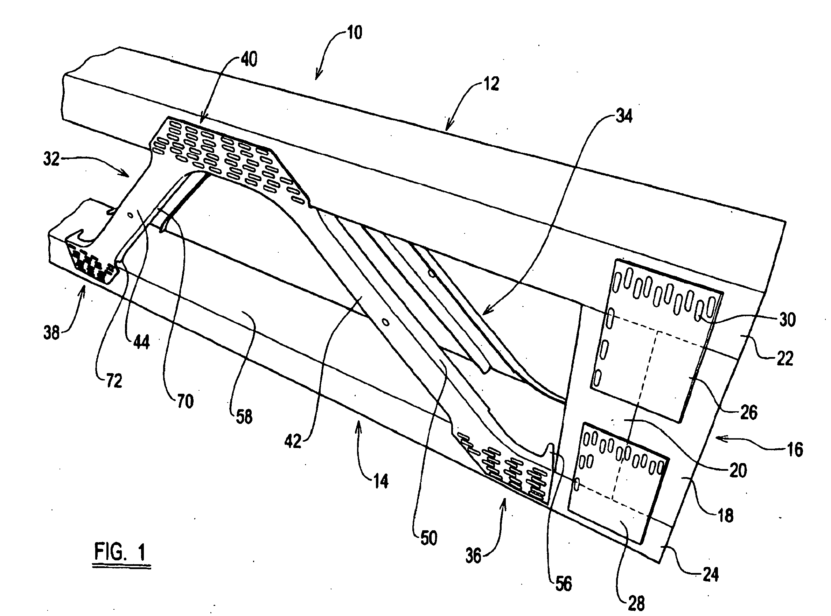

The invention will now be described by way of example with reference to the accompanying drawings, of which
Figure 1 is a perspective view of part of a truss in accordance with the invention;
Figure 2 is a perspective view of part of a metal web in accordance with the invention;
Figure 3 is a plan view of part of a sheet metal blank from which the metal web as illustrated in figure 2 may be made.
Referring firstly to figure 1 of the drawings, this illustrates an end part of a parallel chord truss in accordance with the invention. It comprises two spaced parallel chords which are elongate timber elements 12, 14 each of rectangular cross-sectional shape. Such a truss may be used in a floor structure in a building, and in use it will in almost all cases be disposed in the illustrated orientation with the chord 12 vertically spaced above the chord 14. Figure 1 shows an end part of the truss 10, and at this end part, the chords 12, 14 are spaced apart from one another by a timber spacing element or column 16 extending between the chords 12, 14 perpendicularly to the length thereof: as illustrated the column 16 comprises two separate column elements 18, 20 disposed alongside one another. The visible side faces 22, 24 of the chords 12, 14 respectively lie in a common plane with the sides of the column elements 18, 20, and these faces constitute attachment faces enabling the components to be secured to one another by nail plates 26, 28. As is well known, the nail plates 26, 28 comprise plates of sheet metal usually a suitable grade of steel, from which a large number of integral teeth have been pressed out so as to extend perpendicular to the general plane of the nail plate, leaving slots visible in the nail plate is external surface some of which are visible at 30. The nail plates are pressed onto the timber components so that the teeth penetrate the latter in the manner of nails to hold them together. Corresponding such nail plates would be provided at the other, not visible, side of the truss.

A further timber spacing element or column would be provided at the opposite end, not illustrated, of the truss, and possibly one or more further intermediate such spacing elements.

Between the timber spacing elements the chords are secured to one another in the required spaced parallel relationship by a plurality of metal webs. Figure 1 of the drawings shows one such web indicated generally at 32 and part 34 of a further such metal web at the opposite side of the truss. The metal webs 32, 34 are identical to one another, and the web 32 comprises first and second end attachment portions 36, 38, which attach to the chord 14 and an intermediate attachment portion 40 which attaches to the chord 12. Between the attachment portions 36, 40 and 38, 40 there extend respective spacing portions 42, 44 which are inclined to the length of the chords 12, 14, so that the metal web is generally V-shaped, albeit inverted in orientation as shown in the drawings. The next, not illustrated, metal webs along the truss would be of the opposite, i.e. normal V, orientation, and so on along the length of the truss.

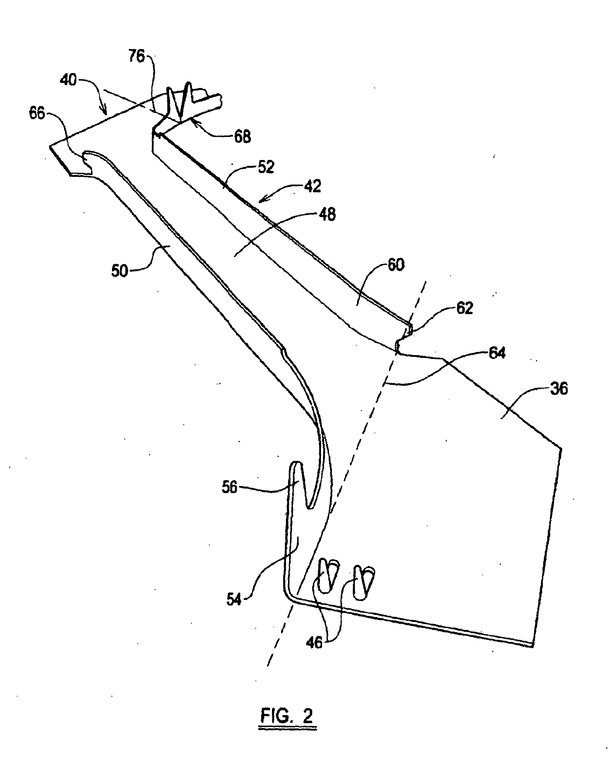

The metal webs are of sheet metal such as steel, made by suitable stamping and pressing operations to form them to the configuration described hereafter and treating them, e.g. galvanising, for corrosion resistance. Referring now, additionally, to Figure 2 of the drawings, the attachment portions 36, 38, 40 thereof are formed as nail plate portions, with integral teeth able to be embedded in the timber of the chords of the truss to secure the attachment portions thereto. Each of the attachment portions is provided with a plurality of such teeth, the slots left by the formation thereof being visible in figure 1 and two only of such teeth, on the attachment portion 36, being indicated at 46 in Figure 2 of the drawings. The spacing portions 42, 44 of the metal web each comprise, as clearly visible for the spacing portion 42, an elongate portion 48 which lies in the same plane as the nail plate attachment portions 36, 38, 40 of the web, with its edges having flanges 50, 52 extending at right angles to the plane of the portion 48. These flanges 50, 52 extend into the space between and within the width of the chords 12, 14 and face the corresponding flanges on the metal web at the opposite side of the truss.

The flange 50, adjacent the attachment portion 36, curves round so that an end portion 54 of the flange 50 lies parallel to the upper surface 58 of the lower chord 14 and has a locating lug formation 56 which lies against the surface 58. The flange 52 at its end adjacent the attachment portion 36 curves around slightly as indicated at 60 and ends in a projecting engagement formation 62. The engagement formation 62 projects to an extent such that, when the truss is assembled, it embeds in the chord 14 to a depth of, for example, 1 to 1.5 mm from the surface 58 of the chord 14. In Figure 2, the extent of projection of the formation 62 is shown in relation to the broken line 64 indicating the position of the edge of the lower chord 14 between its surfaces 24, 58.

The flange 50 has, at its end opposite the attachment portion 36 and adjacent the attachment portion 40, an engagement formation 66 which, analogously to the formation 62, embeds in the under surface (not shown) of the upper chord 12. The flange 52, adjacent the attachment portion 40, curves round as indicated at 68 to a configuration of two of the portions 54 of the flange 50 in back to back disposition, after which it extends lengthwise of the spacing portion 44 of the metal web, as visible at 70 in Figure 1 ending at 72 in an engagement formation which engages the upper surface 58 of the lower chord 14.

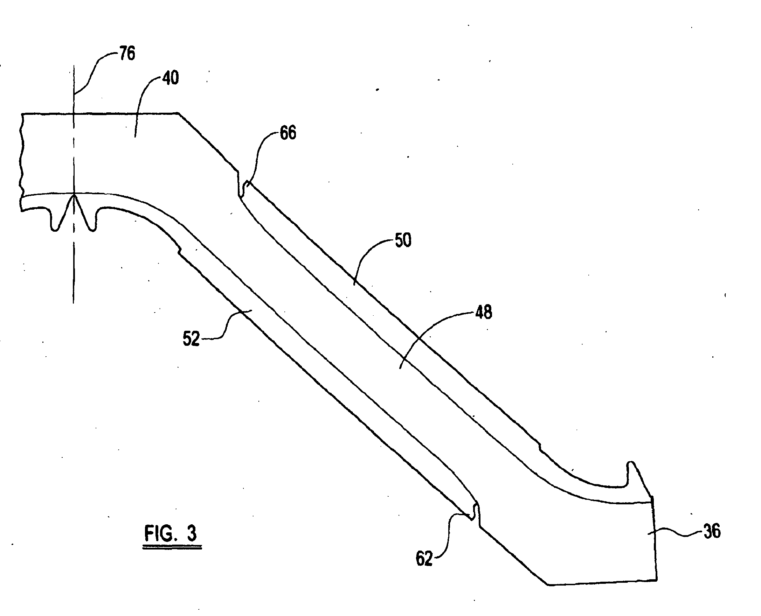

Figure 3 of the drawings illustrates part of a sheet metal blank which forms an early stage of manufacture of a metal web as above described. At this stage it is planar, with respective portions which are to form the attachment portions 36, 40 and the spacing portion 42 with its portion 48 and flanges 50, 52 having their engagement formations 62, 66 at their respective ends.

In a truss incorporating metal webs in accordance with the invention, the presence of the engagement formation 62, 66 which become embedded in the timber chords of the truss has the effect of providing additional support for the spacing portions of the metal webs adjacent their connections to the chords. This provides a significant improvement in the resistance of the webs to buckling of the spacing portions thereof. By way of example, an improvement of the order of 5% in the load which can be withstood before buckling of the spacing portion takes place may be achievable. It also improves the security of attachment of the attachment portions of the metal web to the timber chords.

In manufacture of a truss, in accordance with the method described in the introductory part of the present specification, in the initial stage of positioning the components of the truss in the required disposition relative to one another, on a fabrication surface, the metal webs initially are placed with their locating lug formations as 56 contacting the respective surfaces which face one another of the chords 12, 14, with the tips of the teeth as 46 on the attachment portions of the metal web resting against the attachment faces 22, 24 of the chords. The engagement formations as 62, 66 will slightly indent the edges of the chords between their side faces and facing surfaces. Then, in the course of pressing the attachment portions of the metal webs so that their teeth penetrate the timber chords, the engagement formations will penetrate the surfaces of the chords which face one another, being moved parallel to such surfaces from the edges of the chords. This makes movement of the metal webs from their correct positions less likely in the course of the pressing operation.

The metal web described above is generally V-shaped. Metal webs of other configurations are known, and the invention is applicable to such other configurations. One well known configuration is generally I-shaped, comprising two attachment portions for attachment to respective timber elements and a single spacing portion extending therebetween. In a truss, such a spacing portion may extend at an inclination to the length of the truss.

The V-shaped web as described may be provided, in its intermediate attachment portion 40, with a break line where indicated at 76 in figures 2 and 3, enabling separation of the web at such line into two I-shaped webs, in mirror image of one another. In a truss, the spacing portions of such I-shaped webs extend at an inclination to the length of the truss. The break line may be of reduced thickness compared with the rest of the web, or weakened in some other manner, so that the V-shaped web may be separated into two I-shaped webs without the use of tools.

When used in this specification and claims, the terms "comprises" and "comprising" and variations thereof mean that the specified features, steps or integers are included. The terms are not to be interpreted to exclude the presence of other features, steps or components.

## Claims

1. A metal web (32, 34) for connecting timber elements (12, 14) in spaced relation to one another in a truss, the metal web comprising respective attachment portions (36, 38, 40) having attachment formations (46) able to be embedded into attachment faces (22, 24) of the timber elements and at least one spacing portion (42, 44) extending between the attachment portions, the or each spacing portion (42, 44) comprising a or a respective flange (52, 50) extending along an or a respective edge of the spacing portion, the web being provided with at least one engagement formation (62, 66) adapted to become embedded in a surface (58) of a respective timber element (14) which surface (58) extends transversely of an adjacent attachment face (24) of the timber elements **characterised in that** the at least one engagement formation (62, 66) comprises an end portion of a flange (52, 50), which projects in lengthwise extension of the flange (52, 50), and is caused to become embedded in said surface (58) in the course of causing the attachment formations to be embedded into the attachment face (24), wherein when the attachment portions are placed with tips of their attachment formations (46) resting against attachment faces of the timber elements, the engagement formations (62, 66) slightly indent the edges of the timber elements between their attachment faces and surfaces (58) which extend transversely of the adjacent attachment faces (22, 24) of the timber elements (12, 14).

2. A metal web according to claim 1 further **characterised in that** the at least one spacing portion of the web is arranged to extend at an inclination between the timber elements, and the or each engagement formation is arranged to be in an acute angle defined between the or each spacing portion and the respective timber element.

3. A metal web according to claim 1 further **characterised in that** there is at least one of the engagement formations (62, 66) for each attachment portion of the web.

4. A metal web according to any one of the preceding claims, further **characterised by** comprising two attachment portions (36, 38) for attachment to one timber element (14) and an intermediate attachment portion (40) for attachment to a further timber element (12), and wherein there are engagement formations (62, 66) for engagement with both timber elements.

5. A metal web according to claim 4 **characterised in that** it is generally V-shaped, with both the spacing portions (42, 44) arranged to extend at an inclination to the length of the timber elements (12, 14).

6. A metal web according to claim 4 or claim 5 further **characterised in that** it is separable in its intermediate attachment portion (40) to form two I-shaped webs.

7. A metal web according to any one of the preceding claims which is of sheet metal.

8. A truss comprising timber chords (12, 14) secured in spaced relation to one another by a plurality of metal webs **characterised in that** at least one (32, 34) of the metal webs is a web according to any one of the preceding claims.

9. A truss according to claim 8, further **characterised in that** there is at least one timber spacing element (16) between the chords.

10. A truss according to claim 8 or claim 9, further **characterised in that** it is a parallel chord truss.

## Patentansprüche

1. Metallsteg (32, 34) zum Verbinden von Holzelementen (12, 14) in beabstandeter Beziehung zueinander in einem Fachwerk, wobei der Metallsteg jeweilige Anbringungsteile (36, 38, 40), die Anbringungsformationen (46) aufweisen, welche in Anbringungsflächen (22, 24) der Holzelemente eingebettet werden können, und zumindest ein Beabstandungsteil (42, 44) umfasst, das zwischen den Anbringungsteilen verläuft, wobei das oder jedes Beabstandungsteil (42, 44) einen oder einen jeweiligen Flansch (52, 50) umfasst, der entlang einer oder einer jeweiligen Kante des Beabstandungsteils verläuft, wobei der Steg mit zumindest einer Eingriffsformation (62, 66) versehen ist, die dazu ausgelegt ist, in eine Oberfläche (58) eines jeweiligen Holzelements (14) eingebettet zu werden, welche Oberfläche (58) quer von einer der angrenzenden Anbringungsflächen (24) der Holzelemente verläuft, **dadurch gekennzeichnet, dass** die zumindest eine Eingriffsformation (62, 66) als ein Endteil des Flansches (52, 50) ausgebildet ist, das in die durch den Flansch (52, 50) definierte Längsrichtung vorsteht, so dass bewirkt wird, dass im Verlauf des Bewirkens, dass die Anbringungsformationen in die Anbringungsfläche (24) eingebettet werden, die zumindest eine Eingriffsformation (62, 66) in die Oberfläche (58) eingebettet wird, wobei, wenn die Anbringungsteile so positioniert werden, dass Spitzen ihrer Anbringungsformationen (46) an Anbringungsflächen der Holzelemente anliegen, die Engriffsformationen (62, 66) geringfügig die Kanten der Holzelemente zwischen ihren Anbringungsflächen und Oberflächen (58), die quer von den angrenzenden Anbringungsflächen (22, 24) der Holzelemente (12, 14) verlaufen, einkerben.

2. Metallsteg nach Anspruch 1, weiter **dadurch gekennzeichnet, dass** das zumindest eine Beabstandungsteil des Stegs dazu angeordnet ist, sich in einer Neigung zwischen den Holzelementen zu erstrecken, und die oder jede Eingriffsformation dazu angeordnet ist, in einem spitzen Winkel zu verlaufen, der zwischen dem oder jedem Beabstandungsteil und dem jeweiligen Holzelement begrenzt ist.

3. Metallsteg nach Anspruch 1, weiter **dadurch gekennzeichnet, dass** zumindest eine der Eingriffsformationen (62, 66) für jedes Anbringungsteil des Stegs vorhanden ist.

4. Metallsteg nach irgendeinem der vorhergehenden Ansprüche, weiter **gekennzeichnet durch** das Umfassen von zwei Anbringungsteilen (36, 38) zur Anbringung an ein Holzelement (14) und eines Zwischenanbringungsteils (40) zur Anbringung an einem weiteren Holzelement (12), und wobei es Eingriffsformationen (62, 66) für den Eingriff mit beiden Holzelementen gibt.

5. Metallsteg nach Anspruch 4, **dadurch gekennzeichnet, dass** er im Allgemeinen V-förmig ist, wobei beide Beabstandungsteile (42, 44) dazu angeordnet sind, sich in einer Neigung zu der Länge der Holzelemente (12, 14) zu erstrecken.

6. Metallsteg nach Anspruch 4 oder Anspruch 5, weiter **dadurch gekennzeichnet, dass** er in seinem Zwischenanbringungsteil (40) trennbar ist, um zwei I-förmige Stege zu bilden.

7. Metallsteg nach irgendeinem der vorhergehenden Ansprüche, der aus Metallblech besteht.

8. Fachwerk mit Holzgurten (12, 14), die in beabstandeter Beziehung zueinander durch mehrere Metallstege gesichert sind, **dadurch gekennzeichnet, dass** zumindest einer (32, 34) der Metallstege ein Steg nach irgendeinem der vorhergehenden Ansprüche ist.

9. Fachwerk nach Anspruch 8, weiter **dadurch gekennzeichnet, dass** zwischen den Gurten zumindest ein Holzbeabstandungselement (16) vorhanden ist.

10. Fachwerk nach Anspruch 8 oder Anspruch 9, weiter **dadurch gekennzeichnet, dass** es ein Parallelgurtfachwerk ist.

## Revendications

1. Une poutre de treillis métallique (32, 34) pour connecter des éléments en bois (12, 14) espacés les uns des autres dans une poutre, la poutre de treillis métallique comportant des parties de fixation respectives (36, 38, 40) ayant des formations de fixation (46) pouvant être incorporées dans des faces de fixation (22, 24) des éléments en bois et au moins une partie d'espacement (42, 44) s'étendant entre les parties de fixation, la ou les parties d'espacement (42, 44) comprenant une aile respective (52, 50) s'étendant le long d'un bord respectif de la partie d'espacement, la poutre de treillis étant munie d'au moins une formation d'engagement (62, 66) adaptée pour être intégrée dans une surface (58) d'un élément en bois respectif (14), cette surface (58) s'étendant de manière transversale par rapport à l'une des faces de fixation (24) adjacentes des éléments en bois, **se caractérisant par le fait que** la ou les formations d'engagement (62, 66) sont formées en tant que partie d'extrémité de l'aile (52, 50), qui fait saillie dans la direction longitudinale définie par l'aile (52, 50), de façon à ce que la ou les formations d'engagement (62, 66) soient intégrées dans ladite surface (58) lors de l'intégration des formations de fixation dans la face de fixation (24), et lorsque les parties de fixation sont placées avec les pointes de leurs formations de fixation (46) reposant contre les faces de fixation des éléments des éléments en bois, les formations d'engagement (62, 66) enfoncent légèrement les bords des éléments en bois entre leurs faces de fixation et les surfaces (58) qui s'étendent transversalement par rapport aux faces de fixation contiguës (22, 24) des éléments en bois (12, 14).

2. Une poutre de treillis métallique selon la revendication 1, se caractérisant également par le fait qu'au moins une des parties d'espacement de la poutre de treillis est disposée de façon à s'étendre selon une inclination entre les éléments en bois, et que la ou les formations d'engagement sont disposées de façon à se trouver dans un angle aigu défini entre la ou chaque partie d'espacement et l'élément en bois respectif.

3. Une poutre de treillis métallique selon la revendication 1, se caractérisant également par le fait qu'il y a au moins une des formations d'engagement (62, 66) pour chaque partie de fixation de la poutre de treillis.

4. Une poutre de treillis métallique selon n'importe laquelle des revendications précédentes, se caractérisant également par le fait qu'elle comporte deux parties de fixation (36, 38) pour la fixation à un élément en bois (14) et une partie de fixation intermédiaire (40) pour la fixation à un autre élément en bois (12), et dans laquelle il y a des formations d'engagement (62, 66) pour l'engagement avec les deux éléments en bois.

5. Une poutre de treillis métallique selon la revendication 4, **se caractérisant par le fait qu'**elle possède généralement une forme en V, les deux parties d'espacement (42, 44) étant disposées de façon à s'étendre selon une inclination sur la longueur des éléments en bois (12, 14).

6. Une poutre de treillis métallique selon la revendication 4 ou 5, se caractérisant également par le fait qu'elle est séparable au niveau de sa partie de fixation intermédiaire (40) de façon à former deux poutres de treillis en I.

7. Une poutre de treillis métallique selon n'importe laquelle des revendications précédentes, fabriquée en tôle.

8. Une poutre comprenant des membrures en bois (12, 14) espacées les unes des autres par plusieurs poutres de treillis métalliques, **se caractérisant par le fait qu'**au moins une (32, 34) des poutres de treillis métalliques est une poutre de treillis conforme à n'importe laquelle des revendications précédentes.

9. Une poutre selon la revendication 8, se caractérisant également par le fait qu'il y a au moins un élément d'espacement en bois (16) entre les membrures.

10. Une poutre selon la revendication 8 ou 9, se caractérisant également par le fait qu"il s'agit d'une poutre à membrures parallèles.
